# EUROPEAN PATENT APPLICATION

(11) **EP 4 166 708 A1**
(43) Date of publication of application: **19.04.2023**
(21) Application number: 22205953.7
(22) Date of filing: 12.08.2020
(51) Int. Cl.: D06F 58/10, D06F 58/22

(54) **CLOTHING TREATMENT DEVICE**

(30) Priority: 13.08.2019 KR 20190099026
(62) Divisional of application: 20190653.4
(71) Applicant: LG Electronics Inc., Seoul 07336 (KR)
(72) Inventor: JANG, Juhyuck, 08592 Seoul (KR); CHOI, Junyoung, 08592 Seoul (KR)
(74) Representative: Vossius & Partner Patentanwälte Rechtsanwälte mbB

(57) **Abstract**

The present disclosure relates to a clothing treatment device. The clothing treatment device includes: a cabinet (10) forming a treatment space in which clothing is accommodated; a door (30) configured to open and close the opened front of the cabinet (10); a machine compartment (20) having a suction port (22a) and a discharge port (24a), the suction port (22a) through which air of the treatment space is suctioned, the discharge port (24a) through which air is discharged to the treatment space; and a filter module (100) disposed below the treatment space. The filter module (100) includes: a module cover (130) disposed at a lower side of the treatment space; and a filter unit (110) disposed inside the module cover (130) so that the filter unit is allowed to be withdrawn toward a front of the module cover (130) when the door (30) opens the opened front of the cabinet, the filter unit (110) which filters out foreign substances falling down on the module cover (130).

## Description

### Field of the disclosure

The present disclosure relates to a clothing treatment device, and more particularly, to a clothing treatment device in which a filter portion is disposed below the treatment space.

### Related Art

Clothing treatment devices are apparatuses that treat clothing, e.g. wash and dry clothing and smooth wrinkles in clothing, at home or at laundromats.

Clothing treatment devices may be classified into a washer for washing clothing, a dryer for drying clothing, a washer/dryer having both a washing function and a drying function, a refresher for refreshing clothing, and a steamer for removing unnecessary wrinkles in clothing.

The refresher is an apparatus that keep clothing comfortable and fresh. The refresher functions to dry clothing, to supply fragrance to clothing, to prevent the occurrence of static electricity in clothing, or to remove wrinkles from clothing. Therefore, it is possible to refresh clothing located inside the treatment space by the flow of air in the treatment space for processing the clothing.

Korean Patent Application Publication No. 1020180156752 discloses a clothing treatment device for refreshing clothing located inside the treatment space by the flow of air within a treatment space for processing clothing. However, the clothing treatment device disclosed above has a structure in which a bottom surface is formed at a lower side of the treatment space and a grille for a suction port and a discharge port is formed at a portion of the bottom surface, and thus, there is a problem that foreign substances falling down from clothing by air flowing in the treatment space is accumulated in the bottom surface except for the suction port and the discharge port.

That is, the foreign substances accumulated at the lower side of the treatment space may flow to clothing by the flow of air, thereby causing a problem that the clothing cannot be refreshed.

### SUMMARY OF THE DISCLOSURE

The present disclosure provides a clothing treatment device capable of removing foreign substances accumulated at a lower side of a treatment space.

The present disclosure also provides a clothing treatment device capable of easily collecting foreign substances falling down on the lower side of the treatment space so that the foreign substances can be conveniently removed.

The present disclosure also provides a clothing treatment device capable of maintaining the inside of the treatment space of the clothing treatment device in a refreshed state.

The objects of the present disclosure are not limited to the aforementioned objects, and other objects which are not mentioned will be clearly understood by those skilled in the art from the following description.

In an aspect, the clothing treatment device is provided. The clothing device includes: a cabinet forming a treatment space in which clothing is accommodated, the cabinet opened at a front; a door configured to open and close the opened front of the cabinet; a machine compartment disposed below the treatment space in the cabinet and having a suction port and a discharge port, the suction port through which air of the treatment space is suctioned, the discharge port through which air is discharged to the treatment space; and a filter module disposed below the treatment space and configured to filter out foreign substances from air being introduced through the suction port or collect foreign substances falling down from the treatment space to the machine compartment. Accordingly, it is possible to process foreign substances accumulated on the upper side of the machine compartment.

Specifically, the filter module may include: a module cover disposed at a lower side of the treatment space; and a filter unit disposed inside the module cover so that the filter unit is allowed to be withdrawn toward a front of the module cover when the door opens the opened front of the cabinet, the filter unit which filters out foreign substances falling down on the module cover.

The filter module may be disposed to be detachable upwards of the machine compartment. Accordingly, a user is able to remove foreign substances accumulated on the filter module or foreign substances filtered out.

An accommodation space where the filter unit is accommodated and an opening through which the filter unit is to be inserted and withdrawn may be formed in the module cover, and the filter unit may be slidably coupled to the module cover.

The module cover may include: a lower plate disposed at a lower side of the filter unit and receiving foreign substances falling down from the filter unit; and an upper grille coupled to the lower plate to form an accommodation space where the filter unit is accommodated.

The lower plate and the upper grille may be hinged to each other at one side and hooked to each other at the other side. Accordingly, it is possible to clean the inside of the module cover by easily opening/closing or separating the inside of the filter cover.

When the lower plate and the upper grille are coupled, an opening through which the filter unit is to be inserted from or withdrawn toward the front may be formed. Accordingly, it is possible to easily separate, clean, and replace the filter unit only.

The lower plate may include: a plate portion having a plate shape and forming a space for collecting foreign substances falling down from the treatment space to an upper side of the machine compartment; and an edge portion protruding upwards from a circumferential surface of the plate portion. The plate portion may have a suction port corresponding hole formed therein, the suction corresponding hole which is opened above the suction port in a vertical direction. Accordingly, a space where foreign substances are accommodated may be formed, and air may be allowed to flow through the suction port.

A fixing protrusion for fixing a position of the filter unit inserted into the module cover may be formed in an inner end of the lower plate. Accordingly, it is possible to fix the filter unit inserted into the module cover.

The filter unit may include: a filter configured to filter out foreign substances; and a plurality of filter frames to be inserted into or withdrawn from the accommodation space of the module cover, the plurality of filter frames which is arranged in a grid shape and fixes the filter. A locking groove concave inwards may be formed in one of the plurality of filter frames, so that the fixing protrusion is locked.

The upper grille may include a grille portion disposed at an upper side of the filter unit and a curved end portion disposed at each of both ends of the grille portion to extend in left and right directions, the curved end portion which forms a curved surface extending upwards in a direction away from the grille portion. Accordingly, it is possible to cause foreign substances falling down from the treatment space to the filter unit through the grille portion.

A discharge port cover forming a discharge port and disposed obliquely upwards may be disposed at a rear of the filter module, and the upper grille may include a fixing guide disposed at a rear end of the grille portion and inserted into an insertion space formed between the discharge port cover and the machine compartment. Accordingly, the filter module may be fixed to the upper side of the machine compartment.

A mounting surface in which the filter module is mounted may be formed at an upper side of the machine compartment, and the lower plate may be spaced a predetermined distance from the mounting surface of the machine compartment.

The door may include a slope formed in an inner surface toward the treatment space and protruding toward the treatment space, and the slope may be located above the filter module when the door closes the treatment space. Accordingly, the filter module may not be intervened even by opening/closing of the door.

The filter unit may include a handle exposed to a front of the opening when the filter unit is inserted into the module cover. Accordingly, a user is able to easily withdraw or insert the filter unit.

The machine compartment may include a front holding portion which is formed at a front of the suction port on an upper surface and in which the lower plate is held. Accordingly, the filter module may be held above the machine room.

When the filter module is mounted at the upper side of the machine compartment, the handle may be located above the front holding portion. Accordingly, even though the filter module is mounted at the upper side of the machine compartment, the filter unit may be easily withdrawn toward the front.

Details of other embodiments are included in the detailed description and drawings.

### BRIEF DESCRIPTION OF THE DRAWINGS

FIG. 1 is a view of a clothing treatment device with a door opened, according to an embodiment of the present disclosure.
FIG. 2 is a view of FIG. 1 with a filter module removed.
FIG. 3 is a perspective view of a filter module according to an embodiment of the present disclosure.
FIG. 4 is an exploded perspective view of a filter module according to an embodiment of the present disclosure.
FIG. 5A is a view illustrating a state in which a filter unit is withdrawn from or inserted into a filter cover according to an embodiment of the present disclosure.
FIG. 5B is a view illustrating a state in which a filter cover is opened according to an embodiment of the present disclosure.
FIG. 6 is a perspective view of a module cover and a filter unit mounted on a discharge port cover according to an embodiment of the present disclosure.
FIG. 7 is a view illustrating a cross-sectional view of a filter module and a portion of a discharge port forming surface according to an embodiment of the present disclosure cut in the front-rear direction.
FIG. 8 is an enlarged view of a portion A of FIG. 7.
FIG. 9 is a view for describing a hinge portion and a hinge corresponding portion of the upper grille and the lower plate according to an embodiment of the present disclosure.
FIG. 10 is a view for describing a relationship between a filter module, a front of a machine compartment, and a slope of a door according to an embodiment of the present disclosure.

### DESCRIPTION OF EXEMPLARY EMBODIMENTS

Advantages and features of the inventive concept and methods of accomplishing the same may be understood more readily by reference to the following detailed description of exemplary embodiments and the accompanying drawings. The inventive concept may, however, be embodied in many different forms and should not be construed as being limited to the embodiments set forth herein. Rather, these embodiments are provided so that this disclosure will be thorough and complete and will fully convey the concept of the invention to those skilled in the art, and the inventive concept will only be defined by the appended claims. Like reference numerals refer to like elements throughout the specification.

Hereinafter, the present disclosure will be described with reference to the drawings for explaining a clothing treatment device according to embodiments of the present disclosure.

### <Overal Configurations>

Referring to 1, 2 and 10, overall configurations of a clothing treatment device according to the present embodiment will be schematically described.

A clothing treatment apparatus 1 of the present disclosure may supply steam or hot air to a treatment object (hereinafter referred to as "clothing"), such as clothing placed in the inside, or may supply dry air at a high temperature. In addition, the clothing treatment device 1 may shake off foreign substances from the clothing by applying vibration to the clothing placed in the inside.

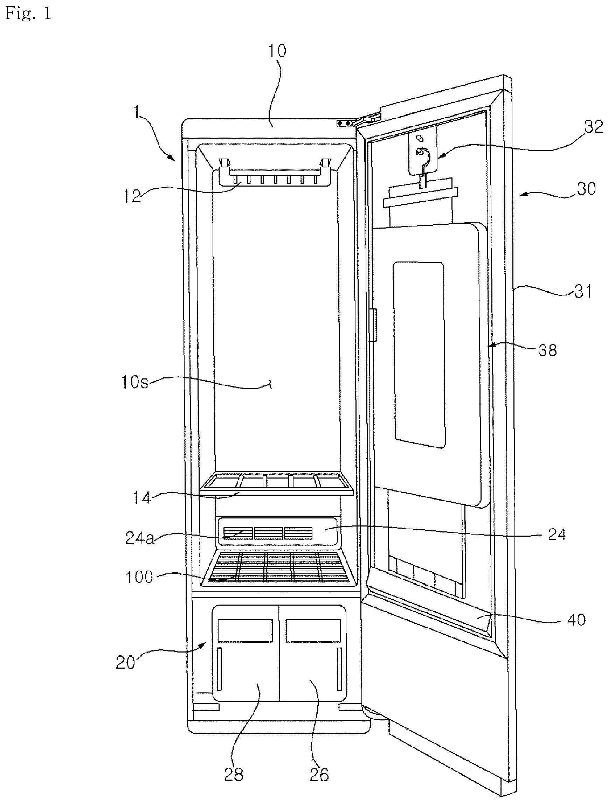

Referring to FIG. 1, the clothing treatment device 1 according to the present disclosure forms a treatment space 10s in which a subject to be processed such as clothing is placed, a cabinet 10 having a front opened, a door 30 which opens and closes the opened front of the cabinet 10, and a machine compartment 20 which is disposed at a lower side of the treatment space 10s and which circulates air with the treatment space.

Within the cabinet 10, a clothing hanger 12 may be disposed in an upper side of the treatment space 10s to hang clothing received in the treatment space 10s, and a shelf 14 in which a small-sized treatment object placed in the treatment space 10s is held may be disposed.

The clothing hanger 12 may be vibrated by a vibration module (not shown) disposed inside the cabinet 10. According to the vibration of the vibration module, the clothing hanger 12 may shake clothing hanging on the clothing hanger 12 to shake off foreign substances from the clothing. The shelf 14 is detachably disposed in the treatment space 10s of the cabinet 10.

The door 30 includes a door plate 31 which covers the front of the cabinet 10, a presser 38 which is located at an inner surface of the door plate 31 facing the treatment space 10s when the door plate 31 is closed and which is configured to apply pressure to clothing, and a clothing fixing portion 32 which fixes the position of clothing located at the presser 38. The clothing fixing portion 32 fixes clothing at the upper side of a presser 38 such that the clothing is stretched downward.

The door 30 includes a slope 40 disposed below the presser 38 and guiding a condensate flowing down the door 30 to a suction port 22a. The slope 40 protrudes obliquely from the inner surface of the door 30 toward the treatment space 10s. The slope 40 is formed in an upper side of the machine compartment 20, and a width thereof protruding from the door 30 increases in a downward direction.

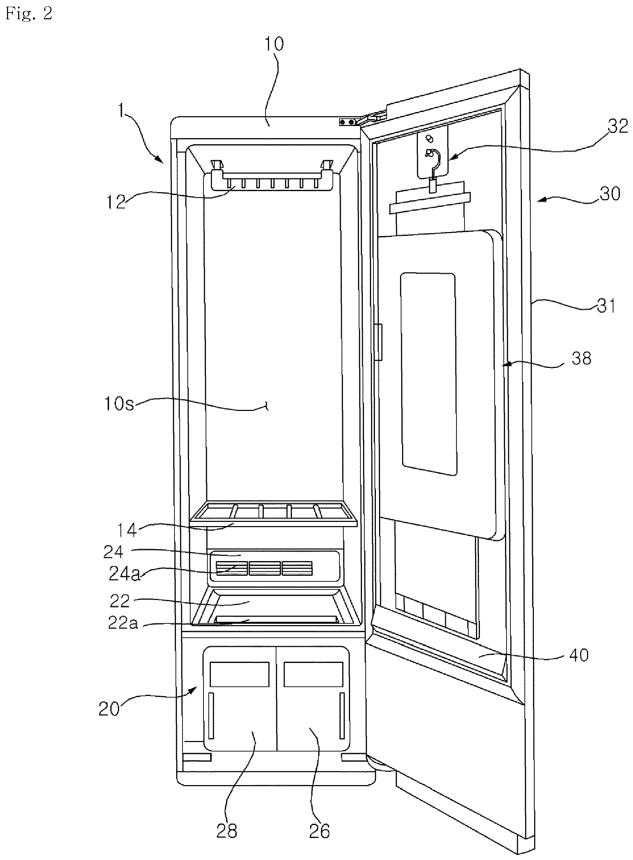

Referring to FIG. 2, the machine compartment 20 is disposed inside the cabinet 10 and below the treatment space 10s to circulate air of the treatment space. In the machine compartment 20, the suction port 22a through which air is suctioned into the machine compartment 20 and a discharge port 24a through which air inside the machine compartment 20 is discharged to the processing room 10s are formed in the upper surface facing the treatment space 10s.

Referring to FIG. 1, a filter module 100 collecting foreign substances falling to a lower side of the treatment space 10s or filtering out foreign substances in air introduced through the suction port 22a is disposed at an upper side of the machine compartment 200. At the upper surface of the machine compartment 20, a mounting surface 22 forming a space in which the filter module 100 is mounted and a discharge port cover 24 in which a discharge port 24a is formed are disposed. At one side of the mounting surface 22, the suction port 22a through which air inside the treatment space 10s is introduced into the machine compartment 20 is formed.

The discharge port cover 24 may also be disposed to be detachable upwards of the machine compartment 20. The filter module 100 is disposed to be detachable upwards of the machine compartment 20 in a state in which the discharge port cover 24 is mounted above the machine compartment 20.

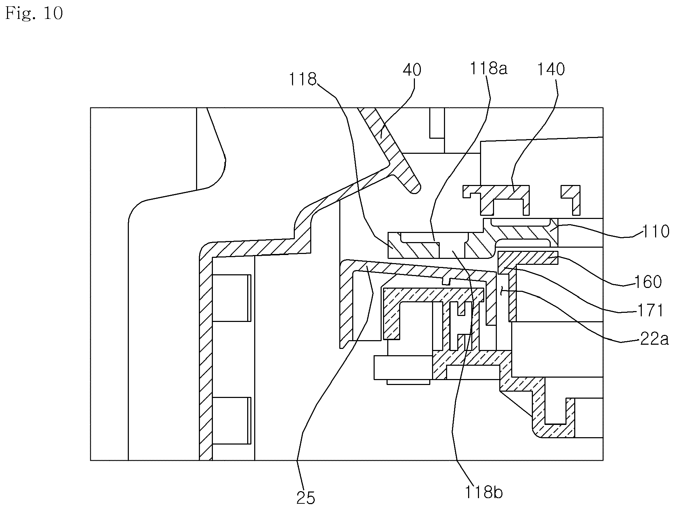

Referring to FIG. 10, a front holding portion 25 in which a front end of a lower plate 160 described below is held is dispose at a front of of the suction port 22a of the mounting surface 22. The machine compartment 20 includes a front holding portion 25 which is disposed at the front of the suction port 22a on an upper surface and in which the lower plate 160 of the filter module 100 to be described below is held.

The front holding portion 25 is disposed below the slope 40. The front holding portion 25 has a shape that is inclined downward toward a rear, and the suction port 22a is formed at a rear end. A handle 118 of a filter unit 110 to be described below is disposed above the front holding portion 25

The filter module 100 may be disposed above the machine compartment 20 to be substantially parallel to the ground, and the discharge port cover 24 may be disposed above the filter module 100 to be in an inclined shape.

A fan (not shown) for causing air introduced into the suction port 22a to flow into the discharge port 24a, an air treatment part (not shown) for performing treatment on air introduced into the machine compartment 20, and a steam supply unit (not shown) for generating steam by heating water and then transmitting the generated stem to the treatment space 10s may be disposed inside the machine compartment 20.

The air treatment part circulates a refrigerant through compression, condensation, expansion, and evaporation processes, such that air introduced through the suction port 22a can be condensed through heat exchange with the refrigerant and heated, thereby transmitting hot and dry air to the discharge port 24a.

The machine compartment 20 includes a first tank 26 for supplying water to the steam supply unit, and a second tank 28 for storing a condensate created by condensation of air inside the machine compartment 20.

### <Filter Module>

Referring to FIGS. 1 to 10, a filter module of the present disclosure and a configuration associated with the filter module will be described.

Referring to FIG. 1, the filter module 100 collects foreign substances contained in air falling from the treatment space 10s or filters out foreign substances flowing to the suction port. The filter module 100 is disposed at an upper surface of the machine compartment 20. The filter module 100 is disposed at an upper side of the mounting surface 22 of the machine compartment.

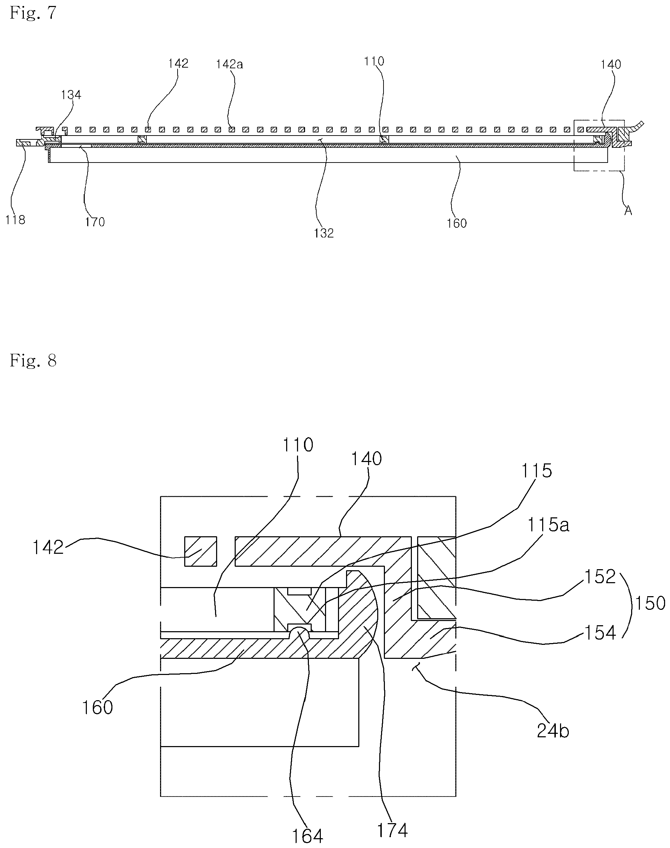

Referring to FIG. 7, a module cover 130 includes an accommodation space 132 in which the filter unit 110 is disposed, an opening 134 through which the filter unit 110 is to be inserted or withdrawn is formed at a front of the accommodation space 132, and the filter unit 110 is slidably coupled to the module cover 130.

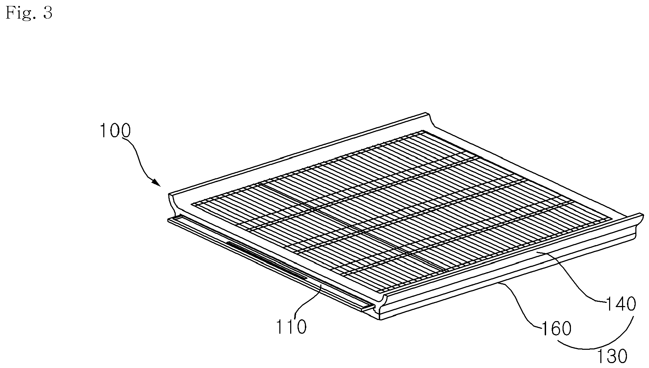

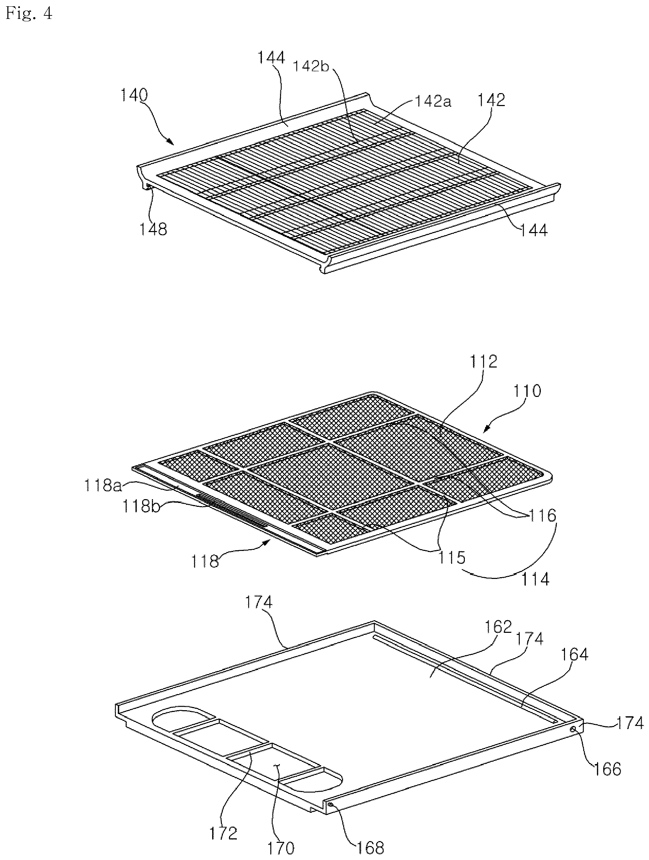

Referring to FIGS. 3 and 4, the filter module 100 includes: the module cover 130 disposed at the upper surface of the machine compartment 20 so that foreign substances of the treatment space 10s falls down; and the filter unit 110 disposed to be withdrawn inwards of the module cover 130 so as to filter out foreign substances that falls to the module cover 130.

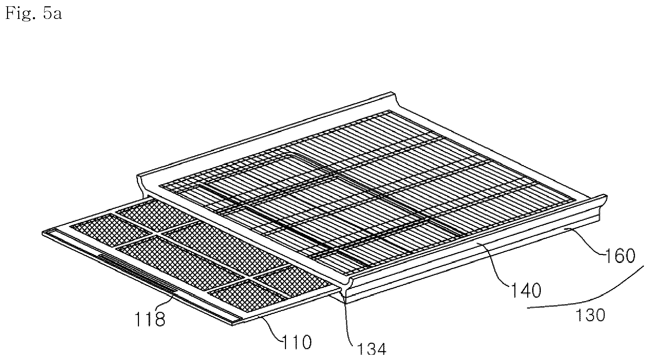

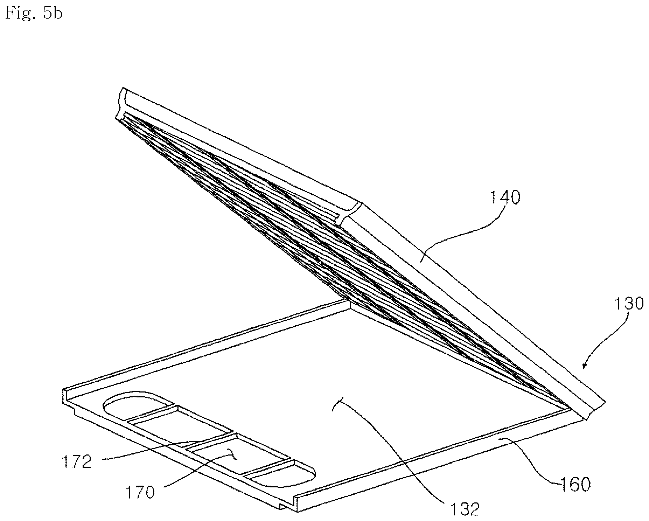

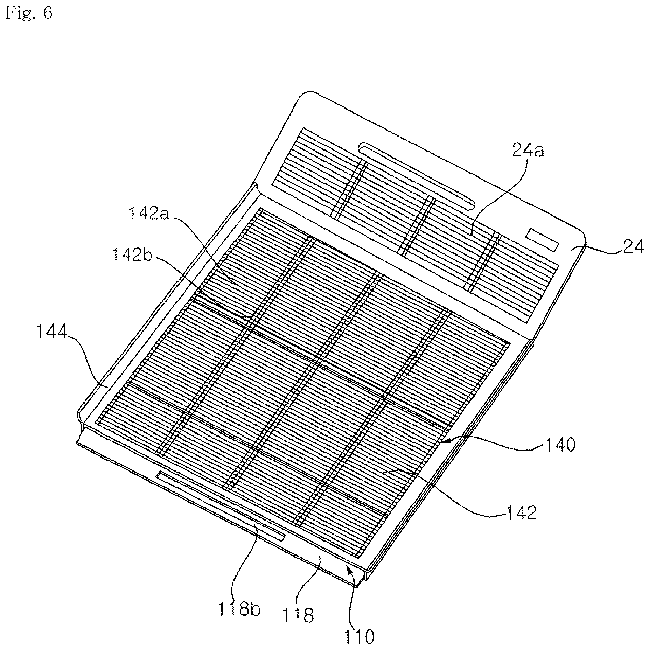

Referring to FIGS. 5 and 6, the module cover 130 includes: the lower plate 160 which is disposed at a lower side of the filter unit 110 and which accommodates foreign substances falling down from the filter unit 110, and an upper grille 140 which is coupled to the lower plate 160 to form an accommodation space 132 where the filter unit 110 is accommodated and which covers an upper side of the filter unit 110.

Referring to FIG. 4, the lower plate 160 has a plate shape and includes a plate portion 162 having one side in which a suction port corresponding hole 170 is formed, and an edge portion 174 protruding upward from a circumferential surface of the plate portion 162.

Referring to FIG. 4, when the filter module 100 is mounted in the filter module mounting surface 22 of the machine compartment 20, the suction port corresponding hole 170 is disposed above the suction port 22a. At least one rib 172 for strength reinforcement is formed in the suction port corresponding hole 170.

When the filter module 100 is mounted in the filter module mounting surface 22, the lower plate 160 is disposed at a predetermined interval upwards from the filter module mounting surface 22. This is to secure a space in which a condensate created from air containing moisture and flowing in the treatment space 10s is drained to the suction port 22a. At the rear of the plate portion 162, a locking protrusion 164 for fixing a position when the filter unit 110 is inserted into the module cover 130 may be formed. The locking protrusion 164 may be disposed adjacent to the edge portion 174 formed at the rear end of the plate portion 162. When the filter unit 110 is inserted into the module cover 130, the locking protrusion 164 is inserted into a locking groove 115a of the filter unit 110, thereby limiting movement of the filter unit 110.

The edge portion 174 may be formed at both ends and a rear end of the plate portion 162. No edge portion is formed at a front end of the plate portion 162 since an opening through which the filter unit 110 is to be withdrawn is formed therein. Foreign substances falling down on the filter module 100 may be collected on the lower plate 160 by the edge portion 174.

Referring to FIG. 8, the edge portion 174 disposed at the rear of the plate portion 162 may be formed in a semicircular shape convex outward in order to prevent interference with a fixing guide 150 of the upper grille 140.

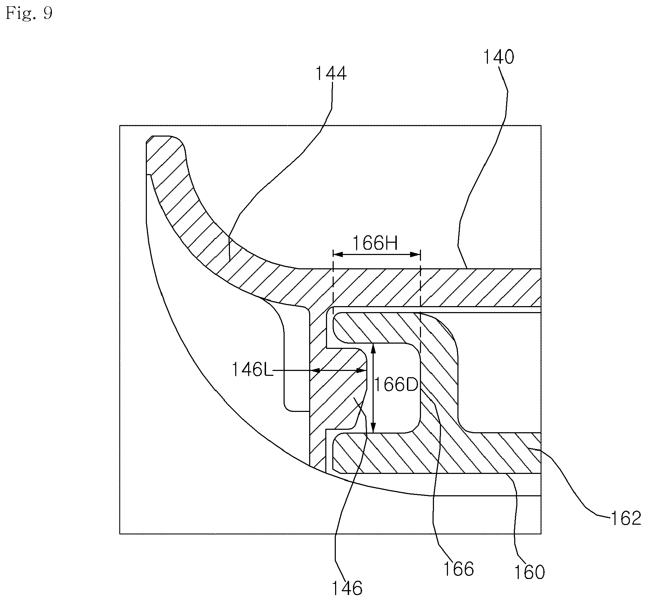

At the rear of each of both ends of the lower plate 160, a hinge portion 166 to be hinged with the upper grille 140 is disposed. Referring to FIG. 9, the hinge portion 166 of the lower plate 160 is hinged with a hinge corresponding portion 146 of the upper grille 140. The hinge portion 166 may be a hinge pin or a hinge hole to which the hinge pin is connected, and the hinge corresponding portion 146 may be a hinge hole or a hinge pin which corresponds to the hinge pin or the hinge hole.

Referring to FIG. 9, the hinge portion 166 of the lower plate 160 according to an embodiment of the present disclosure has a hinge hole formed therein, and the hinge counter portion 146 of the upper grille 140 has a hinge pin formed therein. The hinge portion 166 may be formed behind the edge portion 174 disposed at the both side ends of the plate portion 162.

A protruding length 146L of the hinge corresponding portion 146 having a hinge pin shape is formed smaller than a depth 166H of the hinge hole formed in the hinge portion 166 and a diameter 166D of the hinge hole. Accordingly, a user is able to easily remove the upper grille 140 from the lower plate 160 by manipulation.

Referring to FIG. 4, a coupling portion 168 to be coupled to the upper grille 140 is disposed at the front of each of the both ends of the lower plate 160. The coupling portion 168 of the lower plate 160 may be hooked with a coupling corresponding portion 148 of the upper grille 140. Therefore, by the user's manipulation, the coupling portion 168 of the lower plate 160 and the coupling corresponding portion 148 of the upper gril 140 may be coupled or decoupled. When the coupling portion 168 of the lower plate 160 and the coupling corresponding portion 148 of the upper grille 140 are decoupled, the upper grille 140 rotates along a hinge axis hinged to the rear side, thereby opening the inside of the module cover 130.

When the coupling portion 168 of the lower plate 160 and the coupling corresponding portion 148 of the upper grille 140 are coupled, the accommodation space 132 in which the filter unit 110 is disposed may be formed between the lower plate 160 and the upper grille 140.

The coupling portion 168 of the lower plate 160 has a hook shape, and the coupling corresponding portion 148 of the upper grille 140 may have a shape of a locking protrusion with which that the coupling portion 168 in the hook shape is locked.

Referring to FIG. 4, the upper grille 140 is coupled to the lower plate 160 from above the lower plate 160. The upper grille 140 includes a grille portion 142 disposed at the upper side of the filter unit 110, a curved surface periphery disposed at both ends of the grille portion 142 and forming a curved surface extending upward in a direction away from the grille portion 142, and a fixing guide 150 disposed at a rear end of the grille portion 142 and inserted into an insertion space 24b of the discharge port cover 24 to fix the filter module 100 to an upper side of the machine compartment 20.

As described above, the upper grille 140 further includes the hinge corresponding portion 146 and the coupling corresponding portion 148, which are in a structure for coupling with the lower plate 160.

The grille portion 142 may be formed with a plurality of horizontal grills 142a formed in the left and right directions and a plurality of vertical grills 142b formed in the front-rear direction. The plurality of horizontal grills 142a may be arranged at short intervals, compared to the plurality of vertical grills 142b.

The curved end portion 144 are disposed at each of the both ends of the grille portion 142. The curved end portion 144 is convex toward the lower side and forms a curved surface toward the upper side in a direction away from the grille portion 142. Accordingly, foreign substances falling from the treatment space may be induced to move to the grille portion 142 along the curved end portion 144.

Referring to FIG. 8, the fixing guide 150 protrudes rearward from a rear end of the grille portion 142 and is inserted into the insertion space 24b formed at a lower side of the discharge port cover 24. When the fixing guide 150 is inserted into the insertion space 24b formed at the lower side of the discharge port cover 24, the module cover 130 or the filter module 100 is stably mounted at the upper side of the machine compartment 20.

The fixing guide 150 is bent at the rear end of the grille portion 142 to extend downward, and the fixing guide 150 includes a rear cover 152 covering the rear of the lower plate 160, and a rear protrusion 154 bent at a lower end of the rear cover 152 to extend rearward. The rear protrusion 154 may have a shape and a size each corresponding to the insertion space 24b, so that the rear protrusion 154 can be inserted into the insertion space 24b formed at the lower side of the discharge port cover 24.

Referring to FIG 10, a lower protruding portion 171 extending in a downward direction and inserted into the suction port 22a is formed in a front of the lower plate 160. The lower protruding portion 171 is formed as a circumference of the suction port corresponding hole 170. The lower protruding portion 171 may be held in the front holding portion 25.

Referring to FIG. 10, when the lower plate 160 and the upper grille 140 are coupled, the accommodation space 132 in which the filter unit 110 is disposed is formed inside, and the opening 134 through which the filter unit 110 can be withdrawn is formed outside. When the module cover 130 is mounted at the upper side of the machine compartment 20, the opening 134 is located above the front holding portion 25. Accordingly, the filter unit 110 inserted through the opening 134 may be inserted and withdrawn in the forward direction even when the module cover 130 is mounted at the upper side of the machine compartment 20.

Referring to FIG. 4, the filter unit 110 includes: a filter for filtering out foreign substances; a filter frame 114 fixing the filter 112 and capable of being inserted or withdrawn into and from the accommodation space 132 of the module cover 130; and a handle 118 exposed to an outside of the opening 134 of the module cover 130 when the filter unit 110 is inserted into the module cover 130.

Referring to FIG. 4, the filter frame 114 may include a plurality of horizontal frames 115 formed in the left-right direction and a plurality of vertical frames 116 formed in the front-rear direction. A sectional view of the filter frame 114 may have a shape in which the length increases in the vertical direction in a direction from the center to both ends for strength reinforcement. Accordingly, the locking groove 115a concave to the center may be formed at a lower side and an upper side.

Referring to FIG. 8, the locking protrusion 164 of the lower plate 160 may be inserted into the locking groove 115a formed in a horizontal frame 115 disposed at a rear end. Therefore, when the filter unit 110 is inserted into the accommodation space 132 of the module cover 130, the locking protrusion 164 is caught by the locking groove 115a formed in the horizontal frame 115 disposed at the rear end, thereby fixing the placement of the filter unit 110.

Referring to FIG. 10, the handle 118 has a shape extending forward of the filter frame 114. The handle 118 is exposed to the front of the opening 134 when the filter unit 110 is mounted in the module cover 130. When the filter unit 110 is mounted in the module cover 130, the handle 118 is disposed above the front holding portion 25. When the filter unit 110 is mounted in the module cover 130, the handle 118 is disposed below the slope 40.

The handle 118 includes a handle groove 118a formed in a downward direction from an upper side. A handle hole 118b opened in a vertical direction is included at one side of the handle groove 118. When the door 30 closes the treatment space 10s, an end protruding toward the treatment space of the slope 40 is located above the handle groove 118a.

According to the clothing treatment device of the present disclosure, there are one or more of the following effects.

First, the filter module is disposed above the upper side of the machine compartment to filter out flowing foreign substances or accommodate falling foreign substances, and thus, there is an advantage that the inside of the treatment space can be maintained clean. Accordingly, it is possible to maintain clothing refreshed in the treatment space.

Second, since the filter module is detachably held at an upper side of the machine compartment, a user can detach the filter module and clean the filter module separately, and thus, there is an advantage that foreign substances received therein can be easily treated.

Third, the filter module is composed of a module cover and a filter unit and the filter unit is slidingly coupled from the module cover and is disposed capable of being inserted or withdrawn even in a state in which the filter module is mounted at the upper side of the machine compartment, and thus, there is an advantage that a user can easily separate and use the filter unit only.

The effects of the present disclosure are not limited to the effects mentioned above, and other effects which are not mentioned will be clearly understood by those skilled in the art from the description of the claims.

In the above, although the preferred embodiments of the present disclosure have been illustrated and described, the present disclosure is not limited to the specific embodiments described above, and the technical field to which the present disclosure pertains without departing from the gist of the present disclosure claimed in the claims. Of course, various modifications can be made by those skilled in the art, and these modifications should not be individually understood from the technical prospect of the present disclosure.

The application is further defined by the following items:
1. A clothing treatment device, comprising:
   a cabinet (10) forming a treatment space in which clothing is accommodated, the cabinet (10) being opened at a front;
   a door (30) configured to open and close the opened front of the cabinet (10);
   a machine compartment (20) disposed below the treatment space in the cabinet (10) and having a suction port (22a) and a discharge port (24a), the suction port (22a) through which air of the treatment space is suctioned, the discharge port (24a) through which air is discharged to the treatment space; and
   a filter module (100) disposed below the treatment space and configured to filter out foreign substances from air being introduced through the suction port (22a) or collect foreign substances falling down from the treatment space to the machine compartment (20),
   wherein the filter module (100) comprises:
      a module cover (130) disposed at a lower side of the treatment space; and
      a filter unit (110) disposed inside the module cover (130) so that the filter unit (110) is allowed to be withdrawn toward a front of the module cover (130) when the door (30) opens the opened front of the cabinet (10), the filter unit (110) configured to filter out foreign substances falling down on the module cover (130).
2. The clothing treatment device of item 1, wherein the filter module (100) is disposed to be detachable upwards of the machine compartment (20).
3. The clothing treatment device of item 1 or 2,
   wherein an accommodation space (132) where the filter unit (110) is accommodated and an opening through which the filter unit (110) is insertable and withdrawable are formed in the module cover (130),
   wherein the filter unit (110) is slidably coupled to the module cover (130).
4. The clothing treatment device of any one of items 1 to 3, wherein the module cover (130) comprises:
   a lower plate (160) disposed at a lower side of the filter unit (110), and configured to receive foreign substances falling down from the filter unit (110); and
   an upper grille (140) coupled to the lower plate (160) to form an accommodation space (132) where the filter unit (110) is accommodated.
5. The clothing treatment device of item 4, wherein the lower plate (160) and the upper grille (140) are hinged to each other at one side and hooked to each other at the other side.
6. The clothing treatment device of item 4 or 5, wherein when the lower plate (160) and the upper grille (140) are coupled, an opening through which the filter unit (110) is insertable from or withdrawable toward the front is formed.
7. The clothing treatment device of any one of items 4 to 6, wherein the lower plate (160) comprises:
   a plate portion (162) having a plate shape and forming a space for collecting foreign substances falling down from the treatment space to an upper side of the machine compartment (20); and
   an edge portion (174) protruding upwards from a circumferential surface of the plate portion (162),
   wherein the plate portion (162) has a suction port corresponding hole (170) formed therein, the suction port corresponding hole (170) is opened above the suction port (22a) in a vertical direction.
8. The clothing treatment device of any one of items 4 to 7, wherein a fixing protrusion for fixing a position of the filter unit (110) inserted into the module cover (130) is formed in an inner end of the lower plate (160).
9. The clothing treatment device of item 8, wherein the filter unit (110) comprises:
   a filter configured to filter out foreign substances; and
   a plurality of filter frames (114) insertable into or withdrawable from the accommodation space (132) of the module cover (130), the plurality of filter frames (114) is arranged in a grid shape and configured to fix the filter,
   wherein a locking groove (115a) concave inwards is formed in one of the plurality of filter frames (114), so that the fixing protrusion is locked.
10. The clothing treatment device of any one of items 4 to 9, wherein the upper grille (140) comprises a grille portion (142) disposed at an upper side of the filter unit (110) and a curved end portion (144) disposed at each of both ends of the grille portion (142) to extend in left and right directions, the curved end portion (144) which forms a curved surface extending upwards in a direction away from the grille portion (142).
11. The clothing treatment device of item 10,
   wherein a discharge port cover (24) forming a discharge port (24a) and disposed obliquely upwards is disposed at a rear of the filter module (100),
   wherein the upper grille (140) includes a fixing guide (150) disposed at a rear end of the grille portion (142) and insertable into an insertion space (24b) formed between the discharge port cover (24) and the machine compartment (20).
12. The clothing treatment device of any one of items 4 to 11,
   wherein a mounting surface (22) in which the filter module (100) is mounted is formed at an upper side of the machine compartment (20),
   wherein the lower plate (160) is spaced a predetermined distance from the mounting surface (22) of the machine compartment (20).
13. The clothing treatment device of any one of items 1 to 12, wherein the door (30) comprises:
   a slope (40) formed in an inner surface toward the treatment space and protruding toward the treatment space,
   wherein the slope (40) is located above the filter module (100) when the door (30) closes the treatment space.
14. The clothing treatment device of any one of items 6 to 13, wherein the filter unit (110) comprises a handle (118) exposed to a front of the opening when the filter unit (110) is inserted into the module cover (130).
15. The clothing treatment device of item 14, wherein the machine compartment (20) comprises a front holding portion (25) which is formed at a front of the suction port (22a) on an upper surface and in which the lower plate (160) is held, wherein when the filter module (100) is mounted at the upper side of the machine compartment (20), the handle (118) is located above the front holding portion (25).

## Claims

1. A clothing treatment device, comprising:
a cabinet (10) forming a treatment space in which clothing is accommodated, the cabinet (10) being opened at a front;
a door (30) configured to open and close the opened front of the cabinet (10);
a machine compartment (20) disposed below the treatment space in the cabinet (10) and having a suction port (22a) and a discharge port (24a), the suction port (22a) through which air of the treatment space is suctioned, the discharge port (24a) through which air is discharged to the treatment space; and
a filter module (100) disposed below the treatment space and configured to filter out foreign substances from air being introduced through the suction port (22a) or collect foreign substances falling down from the treatment space to the machine compartment (20),
wherein the filter module (100) has an area larger than a size formed by the suction port (22a).

2. The clothing treatment device of claim 1, wherein a mounting surface (22) forming a space in which the filter module (100) is mounted is formed on an upper surface of the machine compartment (20).

3. The clothing treatment device of claim 2, wherein the suction port (22a) is formed on one side of the mounting surface (22).

4. The clothing treatment device of claim 2 or 3, wherein the filter module (100) is disposed to cover an upper side of the suction port (22a) when the filter module (100) is disposed on an upper side of the mounting surface (22).

5. The clothing treatment device of any one of claims 1 to 4, wherein the filter module (100) comprises:
a module cover (130) disposed at a lower side of the treatment space; and
a filter unit (110) disposed inside the module cover (130), the filter unit (110) configured to filter out foreign substances falling down on the module cover (130),
wherein the suction port (22a) is disposed on a lower side of the filter unit (110).

6. The clothing treatment device of claim 5, wherein the filter unit (110) has an area larger than the size formed by the suction port (22a).

7. The clothing treatment device of claim 5 or 6, wherein the module cover (130) comprises:
a lower plate (160) disposed at the lower side of the filter unit (110), and configured to receive foreign substances falling down from the filter unit (110); and
an upper grille (140) coupled to the lower plate (160) to form an accommodation space (132) where the filter unit (110) is accommodated.

8. The clothing treatment device of claim 7, wherein the lower plate (160) comprises a plate portion (162) having a plate shape and forming a space for collecting foreign substances falling down from the treatment space to an upper side of the machine compartment (20), and
wherein the plate portion (162) has a suction port corresponding hole (170) formed therein, the suction port corresponding hole (170) is opened above the suction port (22a) in a vertical direction.

9. The clothing treatment device of claim 8, wherein the filter unit (110) has an area larger than the size formed by the suction port corresponding hole (170).

10. The clothing treatment device of any one of claims 7 to 9, wherein the lower plate (160) is spaced a predetermined distance from the mounting surface (22) of the machine compartment (20) on which the filter module (100) is disposed.

11. The clothing treatment device of any one of claims 5 to 10, the filter unit (110) is arranged to be drawn out from the module cover (130) in a direction in which the door (30) is arranged.

12. The clothing treatment device of any one of claims 7 to 11, wherein the upper grille (140) comprises a grille portion (142) disposed at an upper side of the filter unit (110) and a curved end portion (144) disposed at each of both ends of the grille portion (142) to extend in left and right directions, the curved end portion (144) which forms a curved surface extending upwards in a direction away from the grille portion (142).

13. The clothing treatment device of claim 12, wherein the grille portion (142) has an area larger than the size formed by the suction port corresponding hole (170).

14. The clothing treatment device of claim 12 or 13,
wherein a discharge port cover (24) forming a discharge port (24a) and disposed obliquely upwards is disposed at a rear of the filter module (100),
wherein the upper grille (140) includes a fixing guide (150) disposed at a rear end of the grille portion (142) and insertable into an insertion space (24b) formed between the discharge port cover (24) and the machine compartment (20).

15. The clothing treatment device of any one of claims 1 to 14, wherein the door (30) comprises:
a slope (40) formed in an inner surface toward the treatment space and protruding toward the treatment space,
wherein the slope (40) is located above the filter module (100) when the door (30) closes the treatment space.
